(19) Europäisches Patentamt
European Patent Office
Office européen des brevets

(11) **EP 4 141 812 A1**

(12) **EUROPÄISCHE PATENTANMELDUNG**

(43) Veröffentlichungstag:
**01.03.2023  Patentblatt 2023/09**

(21) Anmeldenummer: **22192352.7**

(22) Anmeldetag: **26.08.2022**

(51) Internationale Patentklassifikation (IPC):
*G06V 20/40* (2022.01)    *G06V 40/20* (2022.01)

(52) Gemeinsame Patentklassifikation (CPC):
**G06V 20/42; G06V 40/23;** G06V 2201/07

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **27.08.2021  AT 506922021**

(71) Anmelder: **b-tastic sports GmbH**
**4921 Hohenzell (AT)**

(72) Erfinder:
• **PATAKY, MA, DI (FH) Herbert**
**4926 St. Marienkirchen am Hausruck (AT)**
• **PICHLMANN, Stefan**
**4941 Mehrnbach (AT)**

(74) Vertreter: **Fabian, Ferdinand et al**
**Fabian & Schögl Patentanwälte OG**
**Kollmannsberg 57**
**4814 Neukirchen bei Altmünster (AT)**

(54) **VERFAHREN ZUR AUTOMATISCHEN BERECHNUNG VON BALLSPORTSTATISTIKEN**

(57)    Die Erfindung betrifft ein Verfahren zur Ermittlung des Leistungsniveaus eines Spielers in einer Ballsportart auf einem Spielfeld mit Feldern unterschiedlicher Wertigkeit, dadurch gekennzeichnet, dass durch Messen zumindest (i) der Reaktionszeit zumindest eines ersten Spielers, welche die Zeitspanne zwischen dem Zeitpunkt der Einleitung der Bewegung des ersten Spielers in Richtung des Balles bzw. in Richtung des Aufsprungs des Balles und dem Treffen des Balles durch einen weiteren Spieler bzw. eine Maschine bildet, (ii) der Ballgeschwindigkeit und (iii) der Koordinaten der Position des Ballaufsprungs und/oder zumindest eines Spielers, wobei aus der Korrelation zwischen der Wertigkeit des Feldes und der Koordinaten des Ballaufsprungs und/oder zumindest des Spielers ein Parameter ermittelt wird, eine Leistungskennzahl bestimmt wird sowie eine Vorrichtung und ein System zur Durchführung des Verfahrens.

Fig.1

**Beschreibung**

Die Erfindung betrifft ein Verfahren, eine Vorrichtung und ein System zur Ermittlung des Leistungsniveaus eines Spielers in einer Ballsportart.

Sportliche Betätigung lebt vom Vergleich und wird meist erst interessant, wenn man sich verbessern oder mit sich selbst, mit Gleichaltrigen oder mit Konkurrenten vergleichen kann, sei es in einem Wettbewerb, einer Challenge oder durch den Vergleich messbarer Parameter.

Sowohl Leistungssportler als auch Breitensportler haben ein Interesse daran, wo sie leistungsmäßig stehen, wo ihre Stärken liegen, aber auch wo die Schwächen stecken und wie sie diese verbessern können, indem sie wissen was und wie sie trainieren sollen. Dafür bedarf es aber zuerst einer Beurteilung des aktuellen Leistungsniveaus. Den Sportlern stehen für die erste Einschätzung einer Ist-Situation unterschiedliche Leistungstests und Messmethoden, wie beispielsweise ein Conconi-Stufentest, ein Laktatstufentest oder eine Spiroergometrie zur Verfügung. Je nach Anspruch und Zielsetzung kann damit ein aktuelles Leistungsniveau der körperlichen Konstitution eines Sportlers erfasst und entsprechend interpretiert werden. Die Möglichkeiten der Analyse sind neben den oben erwähnten Methoden vielfältig: Tempo, Anstrengungsgrad, Distanz und Höhenmeter, Herzfrequenzvariabilität, optimale Regenerationsdauer - viele Parameter sind präzise messbar. Und dies nicht mehr nur im Medizinlabor mit aufwendigen Apparaturen, sondern zu erschwinglichen Preisen beim spezialisierten Anbieter oder gar mit günstigen Sportuhren, Trackern oder Apps zum Nulltarif.

Die Feststellung des Leistungsniveaus eines Ballsportlers ist mit solchen Tests nicht vollständig durchführbar, weil die Komponente der Beurteilung der Fertigkeiten mit dem Ball fehlen. Ihre Leistungsbeurteilung unterliegt einer sehr subjektiven Wahrnehmung und die objektive Beurteilung des Leistungsniveaus ist daher nur bedingt möglich, wobei auch der Vergleich mit anderen Sportlern derselben Sportart erschwert ist. Dafür stehen in den einzelnen Ballsportarten unterschiedliche Möglichkeiten zur Verfügung.

So ist im Tennis die International Tennis Number (ITN) eine internationale Bewertungsziffer, welche die allgemeine Spielstärke eines Tennisspielers darstellt. Nach diesem System werden Spieler von ITN 1 bis ITN 10 bewertet. Die ITN 1 erhält ein sehr spielstarker Spieler (ein Spieler mit einem ATP-/WTA-Ranglistenplatz oder einem ähnlich hohen Spielniveau). Die ITN 10 erhält ein Spieler, der gerade mit dem Tennisspielen begonnen hat.

Im Golfsport erfolgt die Leistungsniveaubeurteilung mithilfe des Handicaps und ist mit dem ITN-System vom Tennis vergleichbar.

Die bekannten Leistungstests bilden also entweder ausschließlich die körperliche Konstitution des Sportlers ab oder geben Auskunft über die allgemeine Spielstärke des Sportlers aber enthalten keine detaillierten Analysen.

Aufgabe der vorliegenden Erfindung ist es das Leistungsniveau eines Ballsportlers, insbesondere Tennisspielers, feststellen zu können.

Die Aufgabe der Erfindung wird jeweils eigenständig durch ein Verfahren zur Ermittlung des Leistungsniveaus eines Spielers einer Ballsportart gelöst, wobei durch Messen zumindest der Parameter Reaktion, insbesondere Reaktionszeit, zumindest eines ersten Spielers, Ballgeschwindigkeit und Art bzw. Präzision des Schlages, Wurfes bzw. Schusses des Balles das Leistungsniveau des ersten Spielers durch Ermittlung zumindest einer Leistungskennzahl aus diesen Parametern bestimmt wird.

Ferner wird die Aufgabe der Erfindung jeweils eigenständig durch eine Vorrichtung zur Ermittlung des Leistungsniveaus zumindest eines Spielers einer Ballsportart umfassend eine Datenverarbeitungsanlage gelöst, wobei in der Datenverarbeitungsanlage ein Programm gespeichert ist, mit dem das in den Ansprüchen genannte Verfahren durchgeführt wird.

Zudem wird die Aufgabe der Erfindung eigenständig durch ein System zur Ermittlung des Leistungsniveaus zumindest eines Spielers einer Ballsportart umfassend eine Datensammeleinheit zum Erfassen von Daten zumindest eines Spielers und zumindest eines Balles während einer Ballsportart und eine Recheneinheit zur Verarbeitung der Daten, wobei die Daten mit einem in den Ansprüchen genannten Verfahren gesammelt und verarbeitet werden.

Von Vorteil dabei ist, dass dadurch für jedermann, unabhängig davon, ob es sich um einen Leistungs- oder Breitensportler handelt, ein niederschwelliges Angebot zur Bestimmung des Leistungsniveaus eines Ballsportlers zur Verfügung steht. Mit dem erfindungsgemäßen Verfahren können Leistungskennzahlen zu ausgewählten Fertigkeiten eines Ballsportlers festgestellt werden. Die mit dem erfindungsgemäßen Verfahren einzelnen generierten Leistungskennzahlen werden in einer aussagekräftigen Gesamtleistungskennzahl zusammengefasst. Mit diesem Ergebnis kann sowohl das aktuelle Leistungsniveau des Ballsportlers bestimmt werden, ein Vergleich mit anderen Sportlern derselben Sportart durchgeführt werden als auch ein Trainingsplan erstellt werden.

Ferner erweist sich von Vorteil, dass das erfindungsgemäße Verfahren, die Vorrichtung und das System sowohl die körperliche Konstitution des Sportlers abbilden als auch Auskunft über die weiteren Fähigkeiten, insbesondere Geschicklichkeit und Fertigkeit des Sportlers im Umgang mit einem Ball geben. Hierbei kann eine sehr gezielte Beurteilung einzelner Fähigkeiten erfolgen und somit erhält der Ballsportler Informationen um feststellen zu können, wo seine Stärken und Schwächen liegen. Auf Grundlage der Leistungskennzahlen einzelner Fertigkeiten und Bereiche können gezielt Trainingspläne aufgestellt werden.

Vorzugsweise wird als Reaktionszeit die Zeitspanne zwischen zwei unmittelbar aufeinanderfolgenden Ereignissen, insbesondere zwischen dem Zeitpunkt der Einleitung der Bewegung des ersten Spielers in Richtung des Balles bzw. in Richtung des Aufsprungs des Balles, nach dem Treffen des Balles durch einen weiteren Spieler bzw. eine Maschine bestimmt. Somit kann die Reaktionszeit aus der Zeitspanne zwischen zwei unmittelbar aufeinanderfolgenden Ballberührungen, insbesondere Schlägen, durch den ersten Spieler und einen weiteren Spieler bzw. eine Maschine oder Gegenstand oder aus der Zeitspanne zwischen Schlag des ersten Spielers und Einleitung der Bewegung des weiteren Spielers ermittelt werden. Von Vorteil dabei ist, dass durch eine einfache objektive Messung ein Parameter festgestellt wird, und daraus eine Leistungskennzahl ermittelt werden kann und zur weiteren Bestimmung der Gesamtleistungskennzahl des Ballsportlers verwendet werden kann um das Leistungsniveau des Ballsportlers beurteilen zu können.

In einer besonders bevorzugten Ausführungsform erfolgt die Ermittlung der Reaktionszeit mithilfe von Skeletontracking, wodurch ein aus dem Stand der Technik bewährtes Mittel eingesetzt wird und somit ein verlässliches Ergebnis erhalten wird.

Die Spielfeld-, Ball- und Spielererkennung wird vorzugsweise durch bildgebende Verfahren und/oder neuronale Netze, durchgeführt, wodurch eine genaue Identifizierung möglich ist und sehr genaue Daten erhalten werden aufgrund derer die Leistungskennzahlen des erfindungsgemäßen Verfahrens ermittelt werden können.

Bei der Berechnung der Leistungskennzahl für die Ballerkennung und dem Balltracking wird zumindest die Geschwindigkeit des Balles gemessen. Ferner kann die Flugkurve interpoliert und gegebenenfalls ein Richtungswechsel des Balls ermittelt werden. Vorteilhaft dabei erweist sich, dass die Ballerkennung durch die Bestimmung mehrerer Werte erfolgt und damit die Messung exakter erfolgen kann.

Um die Messung und damit das Leistungsniveaus noch exakter beurteilen zu können, werden beim Balltracking bei mehreren Richtungswechseln des Balls die Anzahl und die Zeitpunkte der Richtungswechsel bestimmt.

Aus den Daten der Spielfelderkennung wird ein Koordinatensystem festgelegt, wodurch einerseits sowohl wichtige Daten für die Bestimmung der Ballposition und auch Ballaufsprungposition als auch der Spielerposition ermittelt werden können.

Bei der Spielerkennung wird zumindest dem ersten Spieler eine Koordinate im Koordinatensystem zugeordnet und dessen Bewegung durch Trajektorie verfolgt, wodurch die Positionserkennung zumindest eines Spielers am Spielfeld erfolgt.

Das Spielfeld wird in Felder unterschiedlicher Wertigkeit unterteilt und die Koordinaten der Position des Ballaufsprungs und/oder eines Spielers werden ermittelt, wobei aus der Korrelation zwischen Wertigkeit des Feldes und der Koordinaten des Ballaufsprungs und/oder eines Spielers ebenfalls ein Parameter für die Leistungskennzahl ermittelt wird.

Zur Ermittlung der Position des Ballaufsprungs wird ein statischer oder ein dynamischer Wert herangezogen. Dabei erweist sich von Vorteil einen weiteren Parameter für die Ermittlung der Leistungskennzahl der Ballerkennung zu bestimmen und damit die Ermittlung des Leistungsniveaus genauer und auch objektiver zu ermöglichen.

Um das Leistungsniveau noch exakter bestimmen zu können und die Vergleichbarkeit mit anderen Spielern zu verbessern, wird zur Ermittlung der Leistungskennzahl des ersten Spielers die Qualität des Schlages, Wurfes bzw. Schusses des vorangegangenen und/oder nachfolgenden Schlages, Wurfes bzw. Schusses berücksichtigt.

Die in die Leistungskennzahl einfließenden Werte werden mit Sollwerten verglichen und/oder aus diesem Vergleich wird eine Gewichtung der Werte durchgeführt bevor die Leistungskennzahl bestimmt wird, wodurch objektivierbare Leistungskennzahlen resultieren und ein Vergleich der Spieler untereinander möglich wird.

Vorzugsweise werden bei der Ermittlung der zumindest einen Leistungskennzahl Körperfertigkeiten, Rückantwort auf den Ball, offensives, defensives, neutrales Spiel und/oder anfängliches Wegspielen des Balles vom Spieler analysiert, wodurch viele Parameter in die Bildung der Gesamtleistungskennzahl einfließen und diese daher umso genauer bestimmt werden kann.

Bei der Ermittlung der Qualität des Schlages, Wurfes bzw. Schusses und/oder vorangegangenen oder nachfolgenden Schlages, -wurfes bzw. -schusses werden Parameter ausgewählt aus einer Gruppe umfassend Präzision, Geschwindigkeit, Schlagart, Platzart, Zeitraum, Anzahl und Dauer der Matches, Effektivität, insbesondere Häufigkeit des Gegners in offensiver, neutraler oder defensiver Rolle, Hit-Back-Faktor, insbesondere unter Berücksichtigung des vorangegangenen gegnerischen Schlages, Wurfes bzw. Schusses, analysiert, wodurch ein großes Spektrum an Parametern zur Ermittlung der Leistungskennzahl herangezogen wird.

Letztendlich wird durch mehrere Leistungskennzahlen eine finale Kennzahl bzw. ein finaler Score errechnet, welcher die Gesamtleistungskennzahl darstellt und somit das Leistungsniveau des einzelnen Spielers in vergleichbarer Weise widerspiegelt.

Zum besseren Verständnis der Erfindung wird diese anhand der nachfolgenden Figur näher erläutert.

Es zeigt jeweils in vereinfachter, schematischer Darstellung:

Fig. 1 eine dynamische Präzisionserkennung am Tennisspielfeld;

Fig. 2 eine Zoneneinteilung eines Tennisspielfelds;

Fig. 3 Einteilung des Tennisspielfelds beim Verfahren zur Ermittlung der Leistungskennzahl für winkelverkürztes Stehen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die vorliegende Erfindung beschreibt ein Verfahren zur automatischen Berechnung von Ballsportstatistiken, insbesondere ein Verfahren zur Bestimmung des Leistungsniveaus eines Ballsportlers mithilfe zumindest einer Leistungskennzahl. Das Leistungsniveau des Ballsportlers wird in einer Gesamtleistungskennzahl unter Berücksichtigung einer Vielzahl von Parametern bzw. einzelnen Leistungskennzahlen wiedergegeben.

Mithilfe des erfindungsgemäßen Verfahrens zur Berechnung von Leistungskennzahlen in Ballsportarten, wie beispielsweise Tennis, Fußball, Badminton, Volleyball, Basketball, Tischtennis, etc. ist eine objektive Bestimmung des Leistungsniveaus von Ballsportlern möglich. Die kann sowohl zur Einstufung des momentanen Niveaus entsprechend einer Ranglisteneinstufung verwendet werden als auch zur Erstellung von Trainingsplänen oder zur Dokumentation und Verfolgung des Trainingsfortschritts und somit zur Leistungsentwicklung herangezogen werden.

Die Daten für die Ermittlung des Leistungsniveaus werden zumindest teilweise mittels Videotechnik generiert, wobei bewegte Bilder aufgenommen, übertragen, bearbeitet und gegebenenfalls wiedergegeben werden. Dazu wird zumindest eine Videokamera gestartet und sowohl die Bewegungen zumindest eines Spielers als auch des Balls aufgezeichnet. Die Daten aus der zumindest einen Videoaufnahme werden für das erfindungsmäße Verfahren verwendet und verarbeitet.

Die gewonnenen Daten, die von zumindest einer Videokamera stammen, werden als Basis für die Ermittlung der zumindest einen Leistungskennzahl verwendet. Vorzugsweise werden die Daten aus einem System von mehreren Videokameras gewonnen, aus denen die Leistungskennzahlen der einzelnen Parameter zur Bestimmung der Gesamtleistungskennzahl ermittelt werden.

Als Videokameras werden vorzugsweise 3D Stereokameras verwendet. Beispielsweise wird beim Tennissport zumindest jeweils eine 3D Kamera auf beiden Seiten des Spielfelds aufgestellt.

Die Daten zumindest einer Videokamera werden mittels künstlicher Intelligenz und moderner 3D Analysen ausgewertet und an eine Recheneinheit zur Datenverarbeitung mit dem erfindungsgemäßen Verfahren weitergeleitet.

Das Verfahren umfasst das Messen zumindest der Parameter Reaktion, insbesondere die Reaktionszeit, zumindest eines ersten Spielers, Ballgeschwindigkeit und Präzision des Schlages, Wurfes bzw. Schusses des Balles, woraus das Leistungsniveau des ersten Spielers durch Ermittlung zumindest einer Leistungskennzahl aus diesen Parametern bestimmt wird. Ferner können noch weitere Parameter berücksichtigt werden, insbesondere auch die sportspezifische Schlag-, Wurf- oder Stoßart.

Die Reaktionszeit ist die Zeitspanne zwischen zwei unmittelbar aufeinanderfolgenden Ereignissen. Somit wird die Reaktionszeit des ersten Spielers aus der Zeitspanne zwischen dem Zeitpunkt des Treffens des Balles durch einen anderen Spieler bzw. Gegenstand und dem Zeitpunkt der Einleitung der Bewegung des ersten Spielers in Richtung des Balles bzw. in Richtung des Aufsprungs des Balles ermittelt.

Die Ermittlung der Reaktionszeit kann mithilfe von Skeletontracking durchgeführt werden. Skeletontracking analysiert zumindest 10 Gelenke, vorzugsweise 18 Gelenke, des Körpers und liefert Erkenntnisse über die Bewegung und den Bewegungsablauf.

Die Spielfeld-, Ball- und Spielererkennung werden vorzugsweise durch bildgebende Verfahren und/oder neuronale Netze durchgeführt.

Bei der Ballerkennung und dem Balltracking wird die Geschwindigkeit des Balles gemessen und gegebenenfalls die Flugkurve interpoliert sowie zumindest ein Richtungswechsel des Balls ermittelt.

Zudem wird beim Balltracking bei mehreren Richtungswechseln des Balls die Anzahl und die Zeitpunkte der Richtungswechsel bestimmt.

Bei der Spielfelderkennung erfolgt die Linienerkennung durch bildgebende Verfahren. Aus den Daten der Spielfelderkennung wird ein Koordinatensystem festgelegt.

Bei der Spielererkennung wird dem ersten Spieler eine Koordinate im Koordinatensystem zugeordnet und dessen Bewegung verfolgt, wodurch die Positionserkennung zumindest eines Spielers am Spielfeld möglich ist. Die Bewegungserkennung des Spielers kann auch mittels GPS oder andere aus dem Stand der Technik bekannte Methoden erfolgen.

Die Positionserkennung des Balles kann durch Trajektorie erfolgen, indem die Bahn und/oder der Bewegungspfad des Balles ermittelt werden.

Zur Ermittlung der Position des Ballaufsprungs werden die Daten aus Ballerkennung, Spielfelderkennung und Spielererkennung herangezogen. Das Spielfeld wird dabei in einzelne Felder unterschiedlicher Wertigkeit unterteilt und die Koordinaten der Position des Balles zum Zeitpunkt des Aufsprungs ermittelt, wobei aus der Korrelation zwischen Wertigkeit des Feldes und der Koordinaten des Ballaufsprungs und gegebenenfalls der Position zumindest eines Spielers die Leistungskennzahl oder ein Parameter dafür ermittelt wird.

Ähnliches gilt auch für die Ermittlung der Position des ersten und/oder weiterer Spielers. Auch hier wird das Spielfeld in einzelne Felder unterschiedlicher Wertigkeit unterteilt und die Koordinaten der Position des Spielers ermittelt, wobei aus der Korrelation zwischen Wertigkeit des Feldes und der Koordinaten zumindest eines Spielers und gegebenenfalls der Position zumindest des Ballaufsprungs die Leistungskennzahl oder ein Parameter dafür ermittelt wird.

Abhängig von der Position des Ballaufsprungs wird ein statischer (vorzugsweise nur beim Aufschlag) und/oder ein dynamischer Wert (vorzugsweise bei allen anderen Ereignissen) errechnet, wobei für die X- und Y-Koordinate auf Basis von empirischen Werten unterschiedliche Gewichtungen für den Präzisionswert berücksichtigt werden. Beispielsweise resultiert aus dem Ergebnis aus der (Summe des Produkts aus Präzision in X-Richtung mit der voreingestellten Gewichtung für X und des Produkts aus Präzision in Y-Richtung mit der voreingestellten Gewichtung für Y) geteilt durch die Summe aus der voreingestellten Gewichtung für X und der voreingestellten Gewichtung für Y die Präzisionsbewertung mit Gewichtung für X und Y.

Auch wird beispielsweise beim Aufschlag im Tennis den Randbereichen des Aufschlagfeldes ein statischer Wert von annähernd 100 % zugeordnet und einem Bereich innerhalb des Randbereichs ein statischer Wert von annähernd 80 % und dem restlichen Bereich ein statischer Wert von annähernd 60 %.

Weiters gibt es einen dynamischen Wert, der von der Position des Spielers auf dem Spielfeld abhängig ist. Ausgehend von dessen Koordinaten wird das Spielfeld mit definierter Länge und Breite definiert. Dieses Feld ist nicht notwendigerweise deckungsgleich zum tatsächlichen Spielfeld. Dieses dynamische Spielfeld wird wiederum in Felder unterschiedlicher Wertigkeit unterteilt. Diese Wertigkeit ergibt sich aus der Position des Spielers im Spielfeld zu einem definierten Zeitpunkt, beispielsweise dem Schlag/Wurf/Stoß des gegnerischen Spielers. Felder, die vom Spieler weiter entfernt sind, haben eine höhere Wertigkeit als Felder, auf denen der Spieler steht oder unmittelbar in seiner Nähe sind.

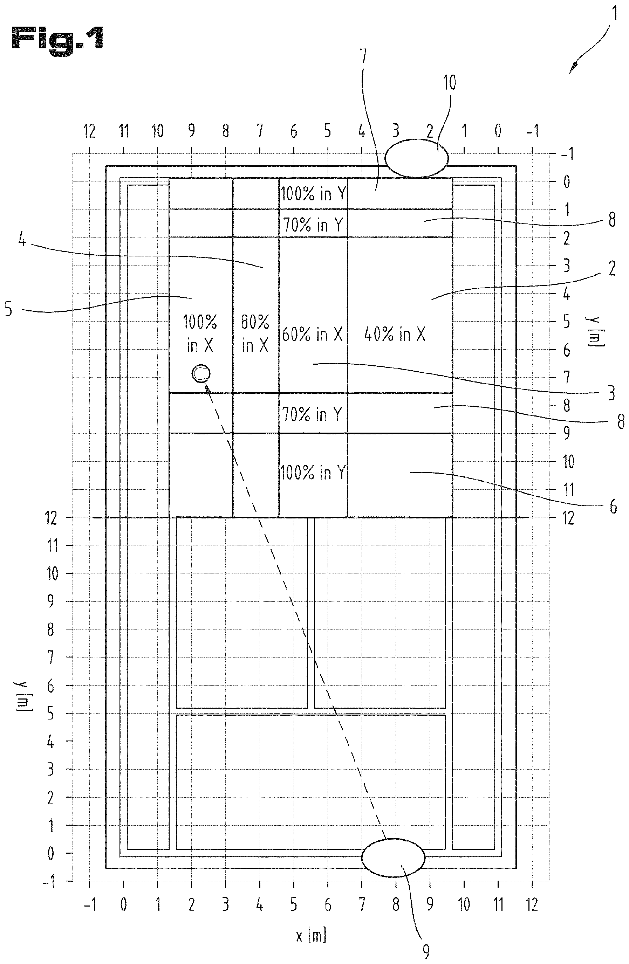

In Fig. 1 ist ein Tennisspielfeld 1 dargestellt, wobei sich die Unterteilung des Tennisspielfelds 1 auf das Einzelfeld bezieht. Fig. 1 zeigt schematisch die Unterteilung in unterschiedlich wertige Zonen, basierend auf der Position und dem Bewegungsvektor des gegnerischen Spielers sowie möglichen Parametern betreffend den Ball oder beispielsweise die Schlagwinkel (winkelverkürztes Stehen) abhängig von den Spielregeln des jeweiligen Ballsports. Am Beispiel in Fig. 1 werden dem Ballaufsprung in der ersten Zone 2 in der Mitte in Bezug auf die Quererstreckung (X-Richtung) des Tennisspielfelds 1 ein dynamischer Wert von 40 %, in der zweiten Zone 3 daneben ein dynamischer Wert von 60 %, in der benachbarten dritten Zone 4 ein Wert von 80 % und in der vierten Zone 5 außen ein dynamischer Wert von 100 % zugeordnet. Ist der Ball im Out wird der Wert 0 % vergeben. Im ersten Bereich 6 unmittelbar nach dem Netz und im zweiten Bereich 7 der Grundlinie erstreckt sich eine Zone mit einem statischen Wert von 100 % und jeweils daneben in Y-Richtung ein weiterer Bereich 8 mit dem statischen Wert von 70 % und in der Mitte des Tennisspielfelds ein statischer Wert von 60 %. Wird ein Ball vom ersten Spieler 9 in die gegnerische Tennisspielfeldhälfte gespielt, ist die Tennisspielfeldhälfte des gegnerischen Spielers 10 entsprechend den angegebenen Werten eingeteilt. Die dynamische Präzisionserkennung resultiert aus dem dynamischen Wert in Abhängigkeit zur Spielerkoordinate.

Zum Zeitpunkt vom Schlag des gegnerischen Spielers 9 wird anhand der zu diesem Zeitpunkt gegebenen Koordinate von Spieler 10 die für den folgenden Ballaufsprung geltende Spielfeldunterteilung erstellt. Dieser Prozess passiert somit dynamisch in Abhängigkeit zur Spielerposition zum definierten Zeitpunkt.

Somit werden jedem Aufsprung des Balles ein statischer und ein dynamischer Wert zugeordnet. Der Mittelwert aus diesen beiden Werten ergibt den Wert für die Positionserkennung und wird der Ermittlung der Leistungskennzahl zugrunde gelegt.

Welche Werte statisch und/oder dynamisch berechnet wird ist abhängig von der Sportart. Beispielsweise werden beim Tennissport ab einer Position von >=3m hinter der Grundlinie des Spielers 10 die Werte nach hinten bzw. bis zu diesem Punkt nach vorne dynamisch reagieren.

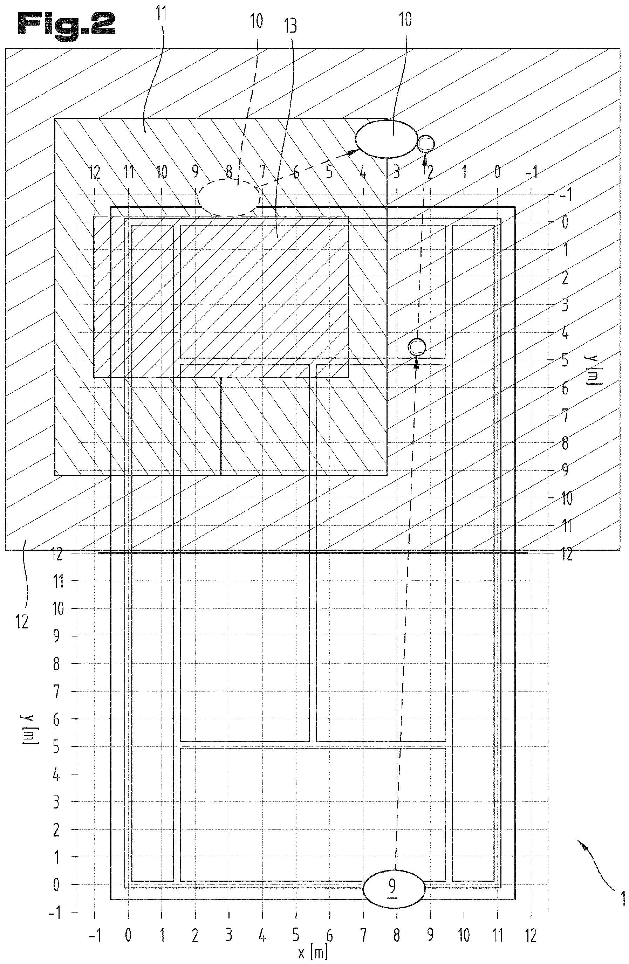

Fig. 2 zeigt die dynamische Zonenerkennung des Tennisspielfelds 1 und gibt dabei den neutralen 11, defensiven 12 und offensiven 13 Bereich eines Spielers im Tennisfeld an. Für die dynamische Spielsituationserkennung werden die oben ermittelten Daten aus Ballerkennung, Spielfelderkennung und Positionserkennung benötigt. Zum Zeitpunkt des Treffens vom ersten Spieler 9 wird ausgehend von den Koordinaten des weiteren Spielers 10 aus der Positionserkennung eine Zone für den weiteren Spieler 10 definiert.

Die Größe der Zone basiert auf empirischen Erfahrungswerten aus einer Datenbank. So beträgt die Größe der Zone beim Tennissport beispielsweise links und rechts vom Spieler 2,5 m, nach vorne 0,5 m und nach hinten 1 bis 1,5 m bei einer Zeitdifferenz von 1,2 Sekunden zwischen beiden Treffpunkten (dies entspricht der Geschwindigkeit eines durchschnittlichen Grundlinienschlages von ca. 80 km/h). Sofern Daten eines vorangegangenen Matches vorliegen, beeinflusst der gemittelte Wert (Leistungskennzahl in %) aus Reaktion und winkelverkürztes Stehen die definierte Zonengröße proportional als Multiplikator. Hier gilt, je höher die Leistungskennzahl desto größer die natürliche Reichweite des Spielers. Die Größe der Zone ist somit maßgeblich abhängig von der Zeit zwischen den beiden Treffpunkten von Ball und des ersten und/oder des weiteren Spielers, insbesondere deren Schlägen und gegebenenfalls oben definierter Leistungskennzahl, welche die Fitness des bzw. der Spieler 9, 10 miteinbezieht.

Diese Zone kann festgelegt werden. In weiterer Folge wird die Position des Spielers bis zur Ausführung des Schlages verfolgt und mit der festgelegten Zone verglichen. In Abhängigkeit des Ergebnisses kann auf die Spielsituation rückgeschlossen werden. Verlässt der Spieler die Zone nicht, handelt es sich um eine neutrale Spielsituation. Verlässt der Spieler die Zone nach hinten oder zur Seite handelt es sich um eine defensive Spielsituation. Und verlässt der Spieler die Zone nach vorne, handelt es sich um eine offensive Spielsituation.

Die dynamische Zonenerkennung erfolgt in Abhängigkeit zur Zeitspanne des Treffers des weiteren Spielers bis zum Treffer des ersten Spielers.

Je kleiner die Zeitspanne zwischen den beiden Treffpunkten ist, desto kleiner werden der neutrale 11 sowie offensive 13 Bereich jeweils zu allen Seiten (hinten, vorne sowie links und rechts). Daraus resultierend wird der defensive 12 Bereich dem Verhältnis entsprechend größer.

Je größer die Zeitspanne zwischen den beiden Treffpunkten ist, desto größer werden der neutrale 11 sowie offensive 13 Bereich jeweils zu allen Seiten (hinten, vorne sowie links und rechts). Daraus resultierend wird der defensive 12 Bereich dem Verhältnis entsprechend kleiner.

Zusammengefasst kann somit festgehalten werden, dass die Größe der jeweiligen Zonen über einen zeitabhängigen Multiplikator proportional berechnet wird.

In Fig. 2 wird gezeigt, dass der ausgeführte Schlag des Spielers 10 im defensiven Bereich 12 erfolgt.

Zur Ermittlung der Leistungskennzahl des ersten Spielers wird die Qualität des Schlages, Wurfes bzw. Schusses des vorangegangenen und gegebenenfalls nachfolgenden Schlages, Wurfes bzw. Schusses des weiteren Spielers berücksichtigt. Bei der Berechnung der Gesamtleistungskennzahl des ersten Spielers wird die Schlagqualität des unmittelbar vorangegangenen und gegebenenfalls des nachfolgenden Schlages des weiteren Spielers als Korrekturfaktur für die Beurteilung des aktuellen Schlages miteinbezogen.

Liegt die Qualität des vorangegangenen Schlages über bzw. unter einem vordefinierten Grenzwert bzw. Sollwert wird ein Korrekturfaktor ermittelt. Die Qualität des vorangegangenen Schlages beinhaltet die Geschwindigkeit, die Trajektorie sowie die Position des Ballaufsprunges. Ist die Schlagqualität des ersten Spielers unter einem Wert von bspw. 50 %, verringert sich die Schlagqualität des weiteren Spielers. Liegt die Schlagqualität des ersten Spielers über bspw. 50 %, erhöht sich die Schlagqualität des weiteren Spielers.

Liegt beispielsweise die Qualität (auf Basis von Präzision und Geschwindigkeit) des Schlages des weiteren Spielers unter 50 % eines Zielwerts, gibt es Abzüge für die Kennzahl betreffend der Leistungskennzahl der Schlagqualität.

Ferner können bei der Ermittlung der Qualität des Schlages, Wurfes bzw. Schusses und/oder ersten Folgeschlages, -wurfes bzw. -schusses auch Parameter ausgewählt aus einer Gruppe umfassend Präzision, Geschwindigkeit, Schlagart, Platzart, Zeitraum, Anzahl und Dauer der Matches, Effektivität, insbesondere Häufigkeit des Gegners in der offensiver, neutraler oder defensiver Rolle, Hit-Back-Faktor, insbesondere unter Berücksichtigung des vorangegangenen gegnerischen Schlages, Wurfes bzw. Schusses, berücksichtigt werden.

Weitere Faktoren können abhängig von der ausgeübten Ballsportart bei der Ermittlung der Leistungskennzahl berücksichtigt werden. Beim Tennissport kann beispielsweise der Laufweg des weiteren Spielers vom Ballaufsprung bis zum Treffpunkt des weiteren Spielers gemessen werden. Dieser Wert fließt in die Berechnung der Leistungskennzahl der Schlagqualität des ersten Spielers mit ein. Durch diesen zusätzlichen Algorithmus können sportartenspezifische Schläge, wie bspw. Dropshots im Tennissport, ähnlich gute Schlagqualität erreichen wie Grundlinienwinner mit hoher Qualität.

Der damit errechnete Korrekturfaktor kann somit dazu verwendet werden, wenn beispielsweise die Bälle nahe am Netz gespielt werden (Volley) und die Geschwindigkeit des Balls eine untergeordnete Rolle (Drop shot) spielt.

Am Beispiel eines Aufschlages im Tennis erfolgt die Ermittlung der Leistungskennzahl beispielsweise aufgrund der Messung der Geschwindigkeit des Balles, zB in km/h, der Präzision des Aufschlags, beispielsweise in welchem Spielfeldsektor des Aufschlagfeldes der Ball aufspringt, und wie der Folgeschlag, beispielsweise als Winner, als offensiver, neutraler oder defensiver Rückschlag durchgeführt wird.

Beim Grundlinienspiel fließt neben der Messung der Geschwindigkeit des Balles auch die Präzision, insbesondere die Position des Aufsprungs des Balles, die Position der Spieler, die zurückgelegte Laufstrecke zumindest eines Spielers, und/oder offensive, defensive oder neutrale Spielweise, etc. bei der Ermittlung der Leistungskennzahl ein. So können für die unterschiedlichen Schläge (Schlagart) im Tennis, wie Grundschlag lang, Grundschlag kurz, hoher langsamer Ball ("Bogenlampe", "Schupfer") lang, Volley lang, Volley kurz cross, Winner, Grundschlag mittel, Slice, Dropshot, etc., jeweils die Leistungskennzahlen berechnet werden.

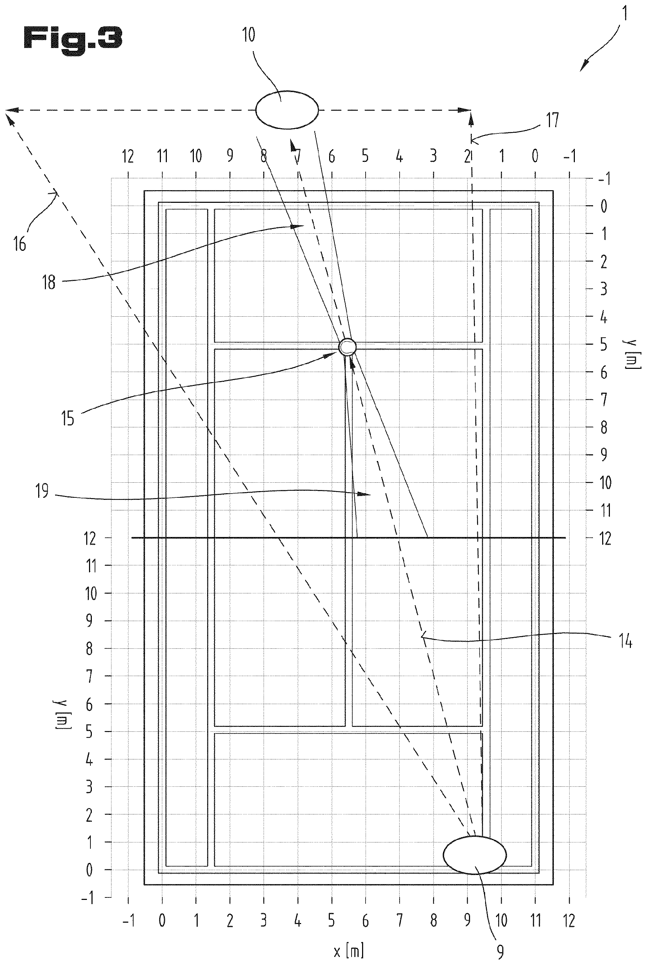

In Fig. 3 wird schematisch die Einteilung des Tennisspielfelds bei der Ermittlung der Leistungskennzahl für winkelverkürztes Stehen gezeigt. Zum Zeitpunkt vom Schlag des Spielers 9 wird die optimale Linie 14 zum Kreuzungspunkt der T-Linie 15 gezogen. Die Linien 16 und 17 geben die Grenzen des möglichen Spielbereichs für den Ball des ersten Spielers 9 an und zeigen innerhalb welcher Winkel ein Schlag möglich ist um den Ball über das Netz zu schlagen und ihn gleichzeitig innerhalb des Spielfelds zu behalten.

Die Linie 14 beschreibt den idealen Standpunkt für den weiteren Spieler 10 zu diesem Zeitpunkt. Die Position des weiteren Spielers 10 befindet sich optimalerweise auf der Winkelhalbierenden des möglichen Spielbereichs des Balls vom ersten Spieler 9. Dem angegebenen Korridor 18 und 19 wird der Wert 100 % zugeordnet. Da die Spieler im vorderen Bereich des Spielfeldes mehr abdecken und im hinteren Bereich mehr Zeit haben, wird der Korridor 18 und 19 im Verhältnis zur Distanz in Y-Richtung vom Kreuzungspunkt 15 berechnet und damit proportional vergrößert bzw. verkleinert in Bezug zum Kreuzungspunkt 15.

Hier findet die ermittelte Geradengleichung aus der Position 15 und Position 9 Anwendung:

$$x = k * y + d$$

x... Leistungskennzahl für winkelverkürztes Stehen
k... Steigung der Geraden 14
y... Position des weiteren Spielers 10
d... Versatz der X-Achse zum Null-Punkt

Setzt man für y die Position des Spielers 10 auf der Y-Achse ein, erhält man die optimale Position X auf der optimalen Linie 14, welche der Spieler 10 besetzen sollte. Die Abweichung zwischen der X Koordinate des Spielers 10 und der errechneten Position auf X kann anschließend bewertet werden.

Es wird zumindest ein Sollwert für die einzelnen Leistungskennzahlen vordefiniert. Die zumindest eine Leistungskennzahl wird auf Basis der ermittelten Werte berechnet, wobei die einzelnen Werte unterschiedlich gewichtet sind und in Relation zu Sollwerten gesetzt werden können.

Die in die Leistungskennzahl einfließenden Werte können mit Sollwerten verglichen werden, und aus diesem Vergleich wird eine Gewichtung der Werte durchgeführt, bevor die Leistungskennzahl bestimmt wird.

Ferner kann die theoretische Leistungsfähigkeit des Spielers, wie die Körperfähigkeiten, die körperliche Daten bzw. Fähigkeiten, wie Reaktionszeit, die in einer Datenbank gespeichert sind, berücksichtigt werden. Auch hier können für das jeweilige Geschlecht, Alter, Gewicht, etc. standardisierte Werte bzw. Sollwerte hinterlegt werden und bei der Ermittlung der Leistungskennzahl berücksichtigt werden.

Bei der Ermittlung der zumindest einen Leistungskennzahl, vorzugsweise Gesamtleistungskennzahl, werden verschiedene Kategorien, wie Körperfertigkeiten, Rückantwort auf den Ball, offensives, defensives, neutrales Spiel und/oder anfängliches Wegspielen des Balles vom Spieler analysiert, wobei den einzelnen Kategorien ebenfalls Leistungskennzahlen zugeordnet werden, die dann die Gesamtleistungskennzahl ergeben.

Die Körperfertigkeiten oder auch Body Skills können bei der ausgeübten Ballsportart selbst oder auch vorab in einem gesonderten Leistungstest, wie beispielsweise Conconi-Stufentest, Laktatstufentest, Spiroergometrie, etc., ermittelt werden.

Durch mehrere Leistungskennzahlen wird eine finale Kennzahl bzw. ein finaler Score errechnet.

Beispiel Tennis

Beim Beispiel Tennis gibt es sechs Hauptkategorien HK1 bis HK6, welche darunterliegende Leistungskennzahlen $F_1$, $F_2$, $F_3$, ...$F_n$ aggregieren. Die Leistungskennzahlen setzen sich aus einer mathematischen Berechnungsformel zusammen, welche als Eingangswerte die Werte der genannten Parameter a, b, c, d, e, f, g in Relation zu Sollwerten B, R, O, N, D, S nutzt.

$$F_1 (a, b, c, d, e, f, g) = a*B + b*R + c*O + d*N + e*D + f*S$$

$$F_2 (a, b, c, d, e, f, g) = a*B + b*R + c*O + d*N + e*D + f*S$$

$F_n = ...$

BRONDS ... statische Werte zur Ermittlung der Leistungskennzahlen aus Datenbanken, wobei die einzelnen Buchstaben für bestimmte Parameter stehen.

B ... Body Skills. Bei der Ermittlung der Leistungskennzahl zu Körperfertigkeiten im Tennissport werden beispielsweise Splitstep Timing, Splitstep Position, Reaktionszeiten, Laufstrecken, etc. analysiert.

R ... Return. Bei der Ermittlung der Leistungskennzahl für den Return wird die Präzision, Geschwindigkeit, Qualität des Returns inkl. Folgeschlag, Filtermöglichkeit auf Schlagarten, Platzarten und Zeitraum der Matches, Effektivität unter Berücksichtigung wie oft der Gegner in der offensiven, neutralen oder defensiven Spielposition ist und Hit Back Faktor, der eine Qualitätsbewertung unter Berücksichtigung des gegnerischen Schlages ist.

O ... offensive Spielweise. Bei der Ermittlung der Leistungskennzahl für die offensive Spielweise wird die Präzision, Geschwindigkeit, Filtermöglichkeit auf Schlagarten, Platzarten und Zeitraum der Matches, Effektivität unter Berücksichtigung wie oft der Gegner in der offensiven, neutralen oder defensiven Spielposition ist und Hit Back Faktor, der eine Qualitätsbewertung unter Berücksichtigung des gegnerischen Schlages ist.

N ... neutrale Spielweise. Bei der Ermittlung der Leistungskennzahl für die neutrale Spielweise wird die Präzision, Geschwindigkeit, Filtermöglichkeit auf Schlagarten, Platzarten und Zeitraum der Matches, Effektivität unter Berücksichtigung wie oft der Gegner in der offensiven, neutralen oder defensiven Spielposition ist und Hit Back Faktor, der eine Qualitätsbewertung unter Berücksichtigung des gegnerischen Schlages ist.

D ... defensive Spielweise. Bei der Ermittlung der Leistungskennzahl für die defensive Spielweise wird die Präzision, Geschwindigkeit, Filtermöglichkeit auf Schlagarten, Platzarten und Zeitraum der Matches, Effektivität unter Berücksichtigung wie oft der Gegner in der offensiven, neutralen oder defensiven Spielposition ist und Hit Back Faktor, der eine Qualitätsbewertung unter Berücksichtigung des gegnerischen Schlages ist.

S ... Service (Aufschlag). Bei der Ermittlung der Leistungskennzahl für das Service wird die Präzision, Geschwindigkeit, Qualität des Service inkl. Folgeschlag, Filtermöglichkeit auf Schlagarten, Platzarten und Zeitraum der Matches, Effektivität unter Berücksichtigung wie oft der Gegner in der offensiven, neutralen oder defensiven Spielposition ist und Hit Back Faktor, der eine Qualitätsbewertung unter Berücksichtigung des gegnerischen Schlages ist.

a, b, c, d, e, f, g ... Eingangswerte entsprechen den Ergebnissen aus dem obigen Verfahren $F_1$, $F_2$ ... $F_n$ ... Leistungskennzahl

Die Leistungskennzahlen $F_1$ ... $F_n$ werden durch gewichtete Aggregation zur Hauptkategorie $HK_1$ ... $HK_n$ berechnet und zur Gesamtleistungskennzahl zusammengefasst. Daraus kann noch eine weitere gewichtete Aggregation erfolgen und die finale Gesamtleistungskennzahl Omega ermittelt werden. Die Gewichtungsfaktoren enthalten unter anderem die Platzbeschaffenheit (Sandplatz, Hartplatz, Rasenplatz) und ähnliches.

Das Ergebnis des Verfahrens kann in einer Applikation dargestellt werden.

Eine Vorrichtung zur Ermittlung des Leistungsniveaus zumindest eines ersten Spielers in einer Ballsportart umfasst eine Datenverarbeitungsanlage, wobei in der Datenverarbeitungsanlage ein Programm gespeichert ist, mit welchem das erfindungsgemäße Verfahren durchgeführt wird. Die Datenverarbeitungsanlage kann auch als Cloud Lösung oder in Kombination mit einer Cloud Lösung ausgeführt sein.

Ferner umfasst die Erfindung ein System zur Ermittlung des Leistungsniveaus zumindest eines ersten Spielers in einer Ballsportart umfassend eine Datensammeleinheit zum Erfassen von Daten zumindest eines Spielers und zumindest eines Balles während einer Ballsportart und eine Recheneinheit zur Verarbeitung der Daten mit dem erfindungsgemäßen Verfahren.

Leistungskennzahlen können neben der Einstufung des Spielers, auch die Vergleichbarkeit der Spieler untereinander ermöglichen oder auch Einfluss auf die Höhe der Löhne der Spieler haben bzw. Einfluss auf Sportwetten oder auf Quotenbroker ausüben.

Die Ausführungsbeispiele zeigen bzw. beschreiben mögliche Ausführungsvarianten des Verfahrens, der Vorrichtung und des Systems, wobei an dieser Stelle bemerkt sei, dass auch Kombinationen der einzelnen Ausführungsvarianten untereinander möglich sind.

Der Ordnung halber sei abschließend darauf hingewiesen, dass zum besseren Verständnis des Aufbaus des Spielfelds diese bzw. deren Bestandteile nicht maßstäblich dargestellt sind.

**Bezugszeichenaufstellung**

| | |
|---|---|
| 1 | Tennisspielfeld |
| 2 | erste Zone |
| 3 | zweite Zone |
| 4 | dritte Zone |
| 5 | vierte Zone |
| | |
| 6 | erste Bereich |
| 7 | zweite Bereich |
| 8 | weitere Bereich |
| 9 | erste Spieler |

10    weitere Spieler

11    neutrale Zone
12    defensive Zone
13    offensive Zone
14    optimale Linie
15    Kreuzungspunkt der T-Linie

16    Linie
17    Linie
18    Korridor
19    Korridor


**Patentansprüche**

1.  Verfahren zur Ermittlung des Leistungsniveaus eines Spielers in einer Ballsportart auf einem Spielfeld mit Feldern unterschiedlicher Wertigkeit, **dadurch gekennzeichnet, dass** durch Messen zumindest (i) der Reaktionszeit zumindest eines ersten Spielers, welche die Zeitspanne zwischen dem Zeitpunkt der Einleitung der Bewegung des ersten Spielers in Richtung des Balles bzw. in Richtung des Aufsprungs des Balles und dem Treffen des Balles durch einen weiteren Spieler bzw. eine Maschine bildet, (ii) der Ballgeschwindigkeit und (iii) der Koordinaten der Position des Ballaufsprungs und/oder zumindest eines Spielers, wobei aus der Korrelation zwischen der Wertigkeit des Feldes und der Koordinaten des Ballaufsprungs und/oder zumindest des Spielers ein Parameter ermittelt wird, eine Leistungskennzahl bestimmt wird.

2.  Verfahren nach Anspruch 1, **dadurch gekennzeichnet, dass** die Ermittlung der Reaktionszeit mithilfe von Skeletontracking durchgeführt wird.

3.  Verfahren nach Anspruch 1 oder 2, **dadurch gekennzeichnet, dass** der Schlag, Wurf bzw. Schuss des Balles als offensives, wobei der Spieler eine Zone nach vorne verlässt, defensives, wobei der Spieler die Zone nach hinten oder zur Seite verlässt, und/oder neutrales Spiel, wobei der Spieler die Zone nicht verlässt, bei der Ermittlung der zumindest einen Leistungskennzahl beurteilt wird.

4.  Verfahren nach zumindest einem der Ansprüche 1 bis 3, **dadurch gekennzeichnet, dass** eine Spielfeld-, eine Ball- und eine Spielererkennung, insbesondere durch bildgebende Verfahren und/oder neuronale Netze, durchgeführt werden.

5.  Verfahren nach einem der Ansprüche 1 bis 4, **dadurch gekennzeichnet, dass** zur Ballerkennung und zum Balltracking zumindest die Geschwindigkeit des Balles gemessen wird, und gegebenenfalls die Flugkurve interpoliert wird und Richtungswechsel des Balls ermittelt werden.

6.  Verfahren nach Anspruch 5, **dadurch gekennzeichnet, dass** beim Balltracking bei mehreren Richtungswechseln des Balls die Anzahl und die Zeitpunkte der Richtungswechsel bestimmt werden.

7.  Verfahren nach zumindest einem der Ansprüche 1 bis 6, **dadurch gekennzeichnet, dass** aus den Daten der Spielfelderkennung ein Koordinatensystem festgelegt wird.

8.  Verfahren nach zumindest einem der Ansprüche 1 bis 7, **dadurch gekennzeichnet, dass** zur Ermittlung der Position des Ballaufsprungs ein statischer oder ein dynamischer Wert herangezogen wird.

9.  Verfahren nach zumindest einem der Ansprüche 1 bis 8, **dadurch gekennzeichnet, dass** bei der Spielerkennung zumindest dem ersten Spieler eine Koordinate im Koordinatensystem zugeordnet wird und dessen Bewegung durch Trajektorie verfolgt wird.

10. Verfahren nach zumindest einem der Ansprüche 1 bis 9, **dadurch gekennzeichnet, dass** zur Ermittlung der Leistungskennzahl des ersten Spielers die Qualität des Schlages, Wurfes bzw. Schusses des vorangegangenen und/oder nachfolgenden Schlages, Wurfes bzw. Schusses berücksichtigt wird, wobei zur Bestimmung der Qualität Parameter ausgewählt aus einer Gruppe umfassend Präzision, Geschwindigkeit, Schlagart, Platzart, Zeitraum, Anzahl und Dauer der Matches, Effektivität, das ist die Häufigkeit des Gegners in der offensiver, neutraler oder defensiver Rolle und Hit-Back-Faktor unter Berücksichtigung des vorangegangenen gegnerischen Schlages, Wurfes bzw. Schusses gemessen werden .

11. Verfahren nach zumindest einem der Ansprüche 1 bis 10, **dadurch gekennzeichnet, dass** die in die Leistungskennzahl einfließenden Werte mit Sollwerten verglichen werden und aus diesem Vergleich eine Gewichtung der Werte durchgeführt wird bevor die Leistungskennzahl bestimmt wird.

12. Verfahren nach zumindest einem der Ansprüche 1 bis 11, **dadurch gekennzeichnet, dass** bei der Ermittlung der zumindest einen Leistungskennzahl auch Körperfertigkeiten, Rückantwort auf den Ball und/oder anfängliches Wegspielen des Balles vom Spieler analysiert werden.

13. Verfahren nach zumindest einem der Ansprüche 1 bis 12, **dadurch gekennzeichnet, dass** durch mehrere Leistungskennzahlen eine finale Kennzahl bzw. ein finaler Score errechnet wird.

14. Vorrichtung zur Ermittlung des Leistungsniveaus zumindest eines ersten Spielers in einer Ballsportart umfassend eine Datenverarbeitungsanlage, **dadurch gekennzeichnet, dass** in der Datenverarbeitungsanlage ein Programm gespeichert ist, mit dem das Verfahren nach einem der Ansprüche 1 bis 13 durchgeführt wird.

15. System zur Ermittlung des Leistungsniveaus zumindest eines ersten Spielers in einer Ballsportart umfassend eine Datensammeleinheit zum Erfassen von Daten zumindest eines Spielers und zumindest eines Balles während einer Ballsportart und eine Recheneinheit zur Verarbeitung der Daten, **dadurch gekennzeichnet, dass** die Daten mit einem Verfahren nach zumindest einem der Ansprüche 1 bis 13 gesammelt und verarbeitet werden.

# Fig.1

# Fig.2

Fig.3

Europäisches
Patentamt

European
Patent Office

Office européen
des brevets

**EUROPÄISCHER RECHERCHENBERICHT**

Nummer der Anmeldung

**EP 22 19 2352**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2014/066779 A2 (NIKE INTERNATIONAL LTD [US]; NIKE INC [US]) 1. Mai 2014 (2014-05-01) * Absatz [0281] – Absatz [0305] * * Absatz [0422] – Absatz [0426] * * Absatz [0372] * * Absatz [0312] – Absatz [0317] * ----- | 1-15 | INV. G06V20/40 G06V40/20 |
| A | WO 2020/160128 A1 (PILLAR VISION INC [US]) 6. August 2020 (2020-08-06) * das ganze Dokument * ----- | 1-15 | |
| A | US 2017/161561 A1 (MARTY ALAN W [US] ET AL) 8. Juni 2017 (2017-06-08) * das ganze Dokument * ----- | 1-15 | |
| A | WO 2004/044712 A2 (KING BRIAN [US]) 27. Mai 2004 (2004-05-27) * das ganze Dokument * ----- | 1-15 | |
| A | WO 2016/025460 A1 (ICUEMOTION LLC [US]) 18. Februar 2016 (2016-02-18) * das ganze Dokument * ----- | 1-15 | RECHERCHIERTE SACHGEBIETE (IPC) G06V |

Der vorliegende Recherchenbericht wurde für alle Patentansprüche erstellt

| Recherchenort | Abschlußdatum der Recherche | Prüfer |
|---|---|---|
| Den Haag | 12. Januar 2023 | Angelopoulou, Maria |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 2352

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2023

| Im Recherchenbericht angeführtes Patentdokument | Datum der Veröffentlichung | Mitglied(er) der Patentfamilie | Datum der Veröffentlichung |
|---|---|---|---|
| WO 2014066779 A2 | 01-05-2014 | CN 105229664 A | 06-01-2016 |
| | | CN 111632353 A | 08-09-2020 |
| | | EP 2912601 A2 | 02-09-2015 |
| | | JP 6151368 B2 | 21-06-2017 |
| | | JP 6416322 B2 | 31-10-2018 |
| | | JP 2015536710 A | 24-12-2015 |
| | | JP 2017213366 A | 07-12-2017 |
| | | KR 20150076236 A | 06-07-2015 |
| | | KR 20190044701 A | 30-04-2019 |
| | | KR 20200034005 A | 30-03-2020 |
| | | WO 2014066779 A2 | 01-05-2014 |
| WO 2020160128 A1 | 06-08-2020 | CN 113727761 A | 30-11-2021 |
| | | WO 2020160128 A1 | 06-08-2020 |
| US 2017161561 A1 | 08-06-2017 | US 2017161561 A1 | 08-06-2017 |
| | | US 2022180638 A1 | 09-06-2022 |
| | | US 2022415048 A1 | 29-12-2022 |
| WO 2004044712 A2 | 27-05-2004 | AU 2003295564 A1 | 03-06-2004 |
| | | US 2004243261 A1 | 02-12-2004 |
| | | WO 2004044712 A2 | 27-05-2004 |
| WO 2016025460 A1 | 18-02-2016 | EP 3194036 A1 | 26-07-2017 |
| | | US 2017232324 A1 | 17-08-2017 |
| | | US 2020289907 A1 | 17-09-2020 |
| | | US 2022366724 A1 | 17-11-2022 |
| | | WO 2016025460 A1 | 18-02-2016 |

EPO FORM P0461

Für nähere Einzelheiten zu diesem Anhang : siehe Amtsblatt des Europäischen Patentamts, Nr.12/82